# FASCICULE DE BREVET EUROPEEN

(11) **EP 1 717 106 B1**
(45) Date de publication et mention de la délivrance du brevet: **17.12.2008**
(21) Numéro de dépôt: 06300348.7
(22) Date de dépôt: 10.04.2006
(51) Int. Cl.: B60R 11/02

(54) **Agencement pour le support dans un véhicule automobile d'un boîtier électronique**
Anordnung eines Elektonikgehäuseträgers in einem Kraftfahrzeug
Arrangement for supporting an electronic housing in a vehicle

(30) Priorité: 25.04.2005 FR 0504128
(43) Date de publication de la demande: 02.11.2006
(73) Titulaire: Renault SAS, 92100 Boulogne Billancourt (FR)
(72) Inventeur: Masson, Bernard, 78640, Saint Germain La Grange (FR); Saclier, Nils, 78490, Grosrouvre (FR)

(56) Documents cités:
- EP-A- 1 291 237
- WO-A-02/14085
- GB-A- 2 116 800
- US-A1- 2003 057 749
- PATENT ABSTRACTS OF JAPAN vol. 2000, no. 22, 9 mars 2001 (2001-03-09) & JP 2001 120385 A (IKEDA BUSSAN CO LTD), 8 mai 2001 (2001-05-08)

## Description

L'invention concerne un agencement pour le support dans un véhicule automobile d'un boîtier électronique, notamment un calculateur de radio, qui est agencé sous l'assise d'un siège du véhicule automobile, selon les caractéristiques du préambule de la revendication 1.

On connaît de nombreux exemples d'agencements de ce type, en particulier dans le document US 2003/0057749 qui sert de base pour la présentation en deux parties de la revendication 1.

Selon une conception connue, on a proposé d'agencer un boîtier électronique, notamment un calculateur radio formant tuner, sous un siège d'un véhicule automobile. Cette conception permet notamment de déporter hors de la planche de bord du véhicule tous les circuits électroniques dudit boîtier électronique, qui sont habituellement logés dans ladite planche de bord du véhicule, et par conséquent de libérer une place importante derrière cette planche de bord pour le montage d'autres équipements.

Lorsque le boîtier électronique est un calculateur radio formant tuner, il ne subsiste alors plus dans la planche de bord qu'un éventuel afficheur du calculateur, qui est relié à celui-ci par l'intermédiaire d'un faisceau électrique du véhicule.

Selon cette conception, le boîtier électronique est fixé sous le siège par l'intermédiaire d'un caisson qui reçoit le boîtier et dont les extrémités sont fixées à des équerres elles-mêmes reliées au siège.

Cette conception en trois éléments présente l'inconvénient de nécessiter un montage préalable des équerres sous le siège, un montage du boîtier dans le caisson puis une fixation du caisson aux équerres. De ce fait, le montage en est particulièrement malaisé.

D'autre part, la fixation du boîtier électronique sous le siège amplifie les vibrations auxquelles est soumis le véhicule, ce qui peut nuire à la fiabilité des connexions du boîtier.

Pour remédier à ces inconvénients, l'invention propose un agencement du type décrit précédemment comportant des moyens simplifiés et améliorés de fixation du boîtier.

Dans ce but, l'invention propose un agencement du type décrit dans la revendication 1.

Selon d'autres caractéristiques de l'invention:
- la traverse est conformée sous la forme d'une plaque sensiblement rectangulaire dont chaque bord d'extrémité transversale comporte sensiblement en son milieu au moins une aile horizontale s'étendant longitudinalement et transversalement vers l'extérieur de la traverse, dont des perçages d'axes verticaux opposés longitudinalement sont destinés à coïncider avec des perçages en regard d'ailes horizontales qui s'étendent vers l'intérieur à partir des rails, lesdits perçages étant destinés à recevoir des pions de fixation.
- chaque aile de la traverse comporte à une de ses extrémités longitudinales une patte recourbée à la verticale dans laquelle est pratiquée une découpe qui est destinée à recevoir un ergot horizontal s'étendant à partir de l'extrémité de l'aile associée du rail, de manière à déterminer la position longitudinale de la traverse de manière univoque préalablement à sa fixation par les pions,
- la traverse comporte dans une partie intermédiaire au moins deux lumières qui sont décalées transversalement et longitudinalement, et qui sont destinées à recevoir des crochets qui sont venus de matière avec le caisson parallélépipédique de réception du support et qui sont destinés à en assurer la fixation,
- chacun des coins de la traverse en forme de plaque rectangulaire comporte une patte recourbée à la verticale qui est destinée à porter le capot.
- chaque patte recourbée verticale comporte un perçage qui est destiné à recevoir un pion de fixation du capot.
- le capot est de forme sensiblement parallélépipédique et ses parois verticales opposées transversalement comportent des perçages qui sont destinés à recevoir les pions de fixation sur les pattes de la traverse,
- la traverse, le caisson parallélépipédique de réception du support, et le capot sont réalisés en tôle d'acier pliée et/ou emboutie,
- un faisceau électrique du véhicule associé au boîtier électronique aboutit dans le caisson et comporte une longueur libre permettant le montage et/ou l'extraction du boîtier électronique sans débrancher le faisceau,
- un habillage rigide de l'élément de structure du siège comporte une trappe destinée à permettre le passage d'un faisceau électrique du véhicule associé au boîtier électronique.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective d'un agencement selon un état antérieur de la technique ;
- la figure 2 est une vue de dessous en perspective d'un agencement selon l'invention ;
- la figure 3 est une vue de dessus en perspective d'un agencement selon l'invention ;
- la figure 4 est une vue en perspective d'une traverse pour l'agencement des figures 2 et 3.

Dans la description qui va suivre, des chiffres de référence identiques désignent des pièces identiques ou ayant des fonctions similaires.

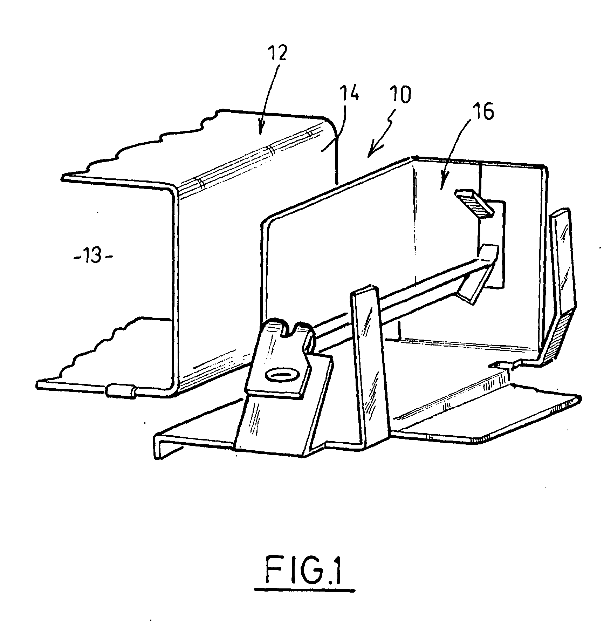

On a partiellement représenté à la figure 1 un agencement 10 pour le support dans un véhicule automobile d'un boîtier électronique (non représenté) notamment un calculateur de radio réalisé conformément à un état antérieur de la technique.

De manière connue l'agencement 10 comporte un caisson 12 dont un logement 13 reçoit le boîtier et dont les extrémités transversales 14 sont fixées à des équerres 16 elles-mêmes reliées à l'assise (non représentée) du siège du véhicule. Le caisson 12 est par exemple de forme sensiblement parallélépipédique. Le caisson 12 et les équerres 16 sont par exemple réalisés par pliage de tôles d'acier, et les équerres 16 sont fixées sur le caisson 12 à l'aide de vis (non représentées).

Cette conception n'est pas satisfaisante car elle n'isole pas assez le boîtier des vibrations auquel est soumis le véhicule.

Pour remédier à cet inconvénient, l'invention propose un agencement 10 du type décrit précédemment, caractérisé en ce que le boîtier électronique est monté coulissant dans un support 18 qui est fixé à un élément 20 de structure dudit siège.

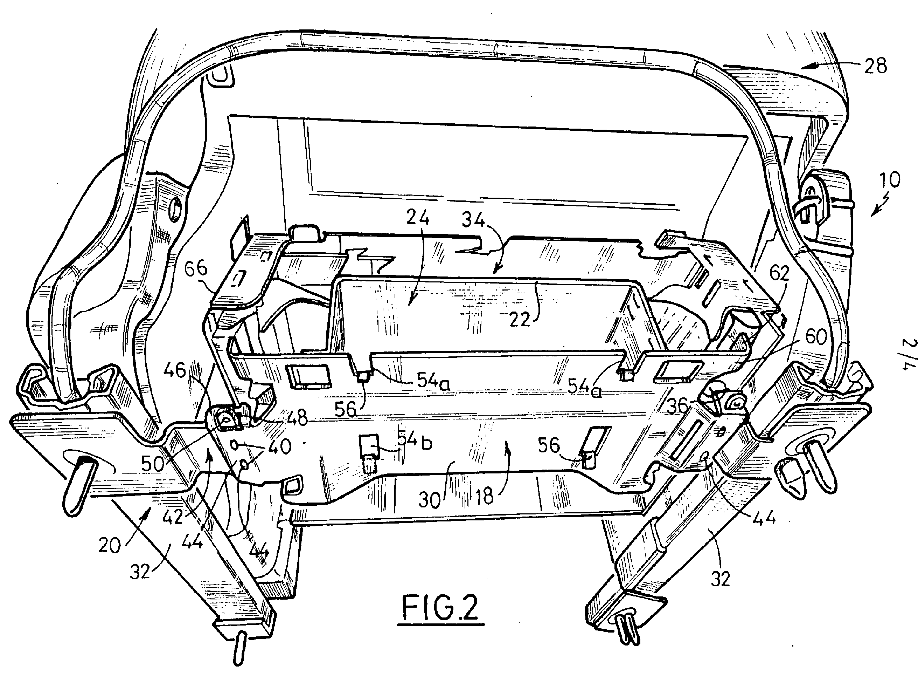

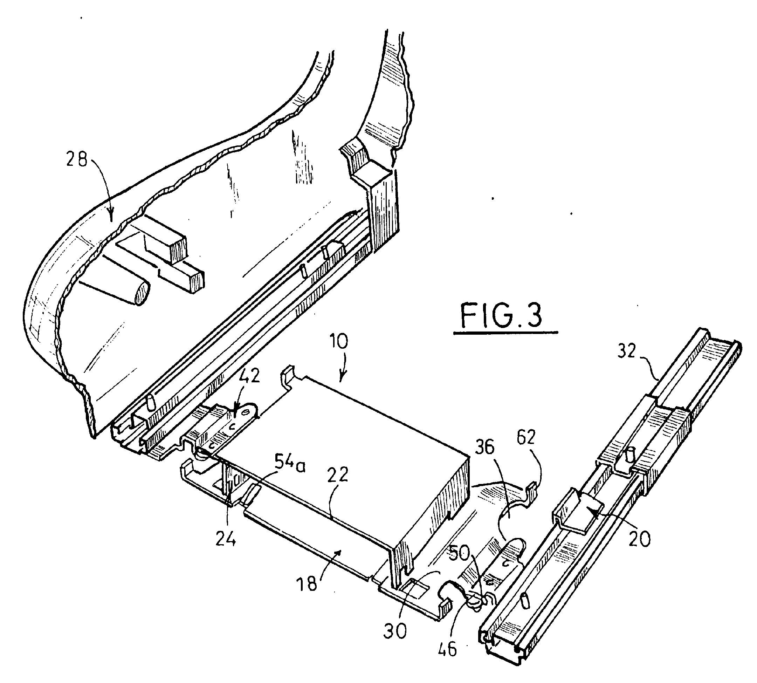

Plus particulièrement, comme l'illustrent les figures 2 et 3, le boîtier (non représenté) est de forme sensiblement parallélépipédique et il est reçu à la manière d'un tiroir à travers un orifice 22 d'introduction pratiqué dans une face d'un caisson 24 de réception du support de forme parallélépipédique, ladite face étant tournée vers l'avant ou l'arrière du siège 28.

Comme l'illustre d'une manière générale la figure 3 et plus particulièrement la figure 2, le support 10 comporte :
- une traverse 30, qui s'étend transversalement entre deux rails 32 de coulissement du siège 28, qui font partie de l'élément 18 de structure dudit siège 28,
- le caisson 24 parallélépipédique de réception du support, qui est fixé sur la traverse, et
- un capot 34 de protection, qui est fixé sur la traverse 30 et qui coiffe le caisson 24 de réception.

Cette conception est particulièrement avantageuse. En effet, à la différence de la conception précédemment connue de l'état de la technique, le boîtier peut ainsi être maintenu directement par l'élément 20 de structure du siège, ce qui garantit un montage exempt de vibrations.

Par ailleurs, le montage est grandement facilité, car pour fixer le boîtier sur l'élément 20 de structure de caisse du véhicule, il suffit de préparer le support 18 en fixant le caisson 24 sur la traverse 30, puis d'insérer le boîtier dans le caisson 24, puis de mettre en place la capot 34 sur la traverse 30, et l'ensemble peut alors être monté directement sur l'élément 18 de structure de siège.

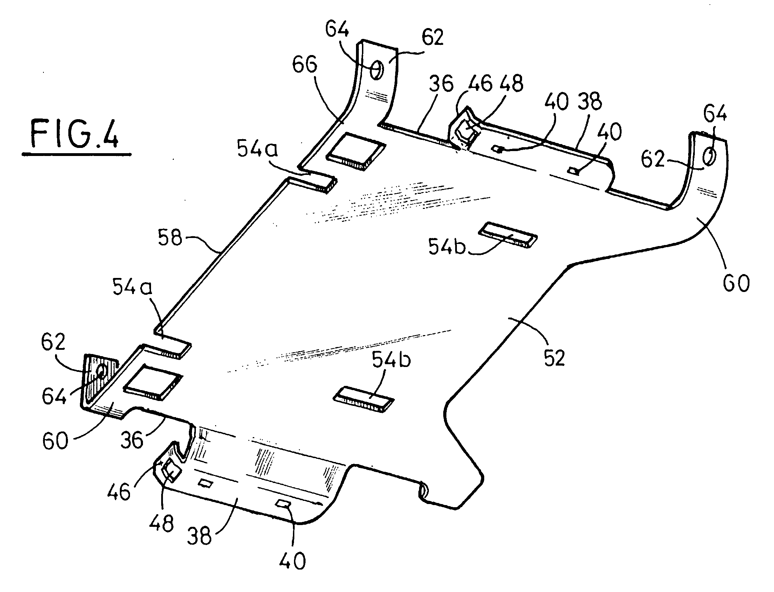

Comme l'illustre la figure 4, dans le mode de réalisation préféré de l'invention, la traverse 30 est conformée sous la forme d'une plaque sensiblement rectangulaire dont chaque bord 36 d'extrémité transversale comporte sensiblement en son milieu au moins une aile 38 horizontale s'étendant longitudinalement et transversalement vers l'extérieur de la traverse 30, dont des perçages d'axes 40 verticaux opposés longitudinalement sont, comme l'illustre la figure 3, destinés à coïncider avec des perçages en regard d'ailes 42 horizontales qui s'étendent vers l'intérieur à partir des rails 32, lesdits perçages 40 étant destinés à recevoir des pions 44 de fixation, comme représenté à la figure 2.

Pour permettre un montage rapide de la traverse sur les ailes 42 des rails 32, chaque aile 38 de la traverse 30 comporte à une de ses extrémités longitudinales une patte 46 recourbée à la verticale dans laquelle est pratiquée une découpe 48 qui est destinée à recevoir un ergot 50 horizontal s'étendant à partir de l'extrémité de l'aile 42 associée du rail 32, de manière à déterminer la position longitudinale de la traverse 30 de manière univoque préalablement à sa fixation par les pions 44.

Selon une autre caractéristique de l'invention, comme l'illustrent les figures 3 et 4, la traverse 30 comporte dans une partie intermédiaire 52 au moins deux lumières 54a, 54b qui sont décalées transversalement et longitudinalement, et qui sont destinées à recevoir des crochets 56 qui sont venus de matière avec le caisson 24 parallélépipédique de réception du support 30 pour en assurer la fixation.

Dans le mode de réalisation préféré de l'invention, la traverse comporte quatre lumières, disposées sensiblement aux quatre coins d'un rectangle qui sont destinées à recevoir quatre crochets conformes 56.

En particulier, deux lumières 54a avant peuvent déboucher sur un bord avant 58 de la traverse pour permettre un montage rapide du caisson 24. A cet effet, lors du montage du caisson 24, on introduit d'abord le caisson 24 en biais de manière que les crochets 56 pénètrent dans les lumières arrière 54b, puis on rabat la caisson 24 sur la traverse de manière que les autres crochets 56 pénètrent dans les lumières avant 54a, et enfin on fait glisser le caisson 24 vers l'arrière de manière que les quatre crochets 54a, 54b immobilisent le caisson 24 en pinçant l'épaisseur de la traverse 30.

Selon une autre caractéristique innovante de l'invention, comme l'illustre la figure 4, chacun des coins 60 de la traverse 30 en forme de plaque rectangulaire comporte une patte 62 recourbée à la verticale qui est destinée à porter le capot 34.

Comme l'illustre la figure 3, chaque patte 62 recourbée verticale comporte un perçage 64 qui est destiné à recevoir un pion (non représenté)de fixation du capot 34.

A cet effet, le capot 34 est de forme sensiblement parallélépipédique et ses parois verticales 66 opposées transversalement comportent des perçages qui sont destinés à recevoir les pions (non représentés) de fixation sur les pattes 62 de la traverse 30.

Il sera compris que, dans le mode de réalisation préféré de l'invention, la traverse, le caisson parallélépipédique de réception du support, et le capot sont réalisés en tôle d'acier pliée et/ou emboutie.

Avantageusement, un faisceau électrique (non représenté) du véhicule associé au boîtier électronique aboutit dans le caisson 24 et il comporte une longueur libre permettant le montage et/ou l'extraction du boîtier électronique sans débrancher ledit faisceau.

En variante, un habillage rigide de l'élément de structure du siège (non représenté) comporte une trappe (non représentée) qui est destinée à permettre le passage d'un faisceau électrique du véhicule associé au boîtier électronique. Cette caractéristique peut permettre d'utiliser un faisceau court. Dans ce cas, lors du montage du boîtier 12, on monte préalablement le boîtier dans le support 18, puis on fait passer le faisceau par la trappe et on le branche sur le boîtier.

L'invention permet donc de monter de manière simple, fiable, et efficace un boîtier sous un siège de véhicule automobile.

## Revendications

1. Agencement (10) pour le support dans un véhicule automobile d'un boîtier électronique, notamment un calculateur de radio, qui est agencé sous l'assise d'un siège (28) du véhicule automobile, du type dans lequel le boîtier électronique est monté coulissant dans un support (18) qui est fixé à un élément (20) de structure dudit siège (28), du type dans lequel le boîtier est de forme sensiblement parallélépipédique et est reçu à la manière d'un tiroir à travers un orifice (22) d'introduction pratiqué dans une face d'un caisson (24) de réception du support de forme parallélépipédique, ladite face étant tournée vers l'avant ou l'arrière du siège (28),
**caractérisé en ce que** le support (18) comporte :
- une traverse (30), qui s'étend transversalement entre deux rails (32) de coulissement du siège (28) faisant partie de l'élément (18) de structure dudit siège (28),
- le caisson (24) parallélépipédique de réception du support, qui est fixé sur la traverse (30), et
- un capot (34) de protection, qui est fixé sur la traverse (30) et qui coiffe le caisson (24) de réception.

2. Agencement (10) selon la revendication précédente, **caractérisé en ce que** la traverse (30) est conformée sous la forme d'une plaque sensiblement rectangulaire dont chaque bord (36) d'extrémité transversale comporte sensiblement en son milieu au moins une aile (38) horizontale s'étendant longitudinalement et transversalement vers l'extérieur de la traverse (30), dont des perçages (40) d'axes verticaux opposés longitudinalement sont destinés à coïncider avec des perçages en regard d'ailes horizontales (42) qui s'étendent vers l'intérieur à partir des rails (32), lesdits perçages (40) étant destinés à recevoir des pions (44) de fixation.

3. Agencement (10) selon la revendication précédente, **caractérisé en ce que** chaque aile (38) de la traverse (30) comporte à une de ses extrémités longitudinales une patte (46) recourbée à la verticale dans laquelle est pratiquée une découpe (48) qui est destinée à recevoir un ergot (50) horizontal s'étendant à partir de l'extrémité de l'aile (42) associée du rail (32), de manière à déterminer la position longitudinale de la traverse (30) de manière univoque préalablement à sa fixation par les pions (44).

4. Agencement (10) selon l'une quelconque des revendications 2 ou 3, **caractérisé en ce que** la traverse (30) comporte dans une partie intermédiaire (52) au moins deux lumières (54a, 54b) qui sont décalées transversalement et longitudinalement, et qui sont destinées à recevoir des crochets (56) qui sont venus de matière avec le caisson (24) parallélépipédique de réception du support (30) et qui sont destinés à en assurer la fixation.

5. Agencement (10) selon l'une quelconque des revendications 2 à 4, **caractérisé en ce que** chacun des coins (60) de la traverse (30) en forme de plaque rectangulaire comporte une patte (62) recourbée à la verticale qui est destinée à porter le capot (34).

6. Agencement (10) selon la revendication précédente, **caractérisé en ce que** chaque patte (62) recourbée verticale comporte un perçage (64) qui est destiné à recevoir un pion de fixation du capot (34).

7. Agencement (10) selon la revendication précédente **caractérisé en ce que** le capot (34) est de forme sensiblement parallélépipédique et **en ce que** ses parois (66) verticales opposées transversalement comportent des perçages qui sont destinés à recevoir les pions de fixation sur les pattes (62) de la traverse (30).

8. Agencement (10) selon l'une quelconque des revendications 1 à 7, **caractérisé en ce que** la traverse (30), le caisson (24) parallélépipédique de réception du support, et le capot (34) sont réalisés en tôle d'acier pliée et/ou emboutie.

9. Agencement (10) selon l'une quelconque des revendications précédentes, **caractérisé en ce qu'**un faisceau électrique du véhicule associé au boîtier électronique aboutit dans le caisson (24) et comporte une longueur libre permettant le montage et/ou l'extraction du boîtier électronique sans débrancher le faisceau.

10. Agencement (10) selon l'une quelconque des revendications précédentes, **caractérisé en ce qu'**un habillage rigide de l'élément (18) de structure du siège comporte une trappe destinée à permettre le passage d'un faisceau électrique du véhicule associé au boîtier électronique.

## Claims

1. Arrangement (10) for mounting an electronic unit, particularly a radio computer, in a motor vehicle, this typically being positioned under the seat part of a seat (28) of the motor vehicle, of the type in which the electronic unit is slidably mounted in a mount (18) which is fixed to a structural element (20) of said seat (28), of the type in which the unit is of substantially parallelepipedal shape and housed in the manner of a drawer through an insertion orifice (22) made in one face of a mount-accepting box (24) of parallelepipedal shape, the said face facing toward the front or toward the rear of the seat (28),
**characterized in that** the mount (18) comprises:
- a crosspiece (30) which runs transversely between two slide rails (32) for the seat (28) that form part of the structural element (20) of the said seat (28),
- the mount-accepting parallelepipedal box (24) which is fixed to the crosspiece (30), and
- a protective cover (34) which is fixed to the crosspiece (30) and covers the accepting box (24).

2. Arrangement (10) according to the preceding claim, **characterized in that** the crosspiece (30) is shaped in the form of a substantially rectangular plate each transverse end edge (36) of which has, more or less at its middle, at least one horizontal flange (38) extending longitudinally and transversely towards the outside of the crosspiece (30), of which longitudinally opposed drillings (40) with vertical axes are intended to coincide with drillings made facing them in horizontal flanges (42) which extend inwards from the rails (32), the said drillings (40) being intended to accommodate fixing pegs (44).

3. Arrangement (10) according to the preceding claim, **characterized in that** each flange (38) of the crosspiece (30) has, at one of its longitudinal ends, a tab (46) that is bent up vertically and in which there is made a cut-out (48) which is intended to accept a horizontal lug (50) extending from the end of the associated flange (42) of the rail (32) so as to determine the longitudinal position of the crosspiece (30) uniquely before it is secured using the pegs (44).

4. Arrangement (10) according to either one of Claims 2 and 3, **characterized in that** the crosspiece (30) has, in an intermediate part (52), at least two slots (54a, 54b) which are transversely and longitudinally offset and are intended to accept hooks (56) formed as an integral part of the parallelepipedal box (24) that accepts the mount (30) and which are intended to secure it.

5. Arrangement (10) according to any one of Claims 2 to 4, **characterized in that** each of the corners (60) of the rectangular plate-shaped crosspiece (30) has a tab (62) bent up vertically to bear the cover (34).

6. Arrangement (10) according to the preceding claim, **characterized in that** each vertical bent-up tab (62) has a drilling (64) intended to accept a peg for attaching the cover (34).

7. Arrangement (10) according to the preceding claim, **characterized in that** the cover (34) is of substantially parallelepipedal shape, and **in that** its transversely opposed vertical walls (66) have drillings which are intended to accept the pegs for attachment to the lugs (62) of the crosspiece (30).

8. Arrangement (10) according to any one of Claims 1 to 7, **characterized in that** the crosspiece (30), the mount-accepting parallelepipedal box (24) and the cover (34) are made from bent and/or pressed steel sheet.

9. Arrangement (10) according to any one of the preceding claims, **characterized in that** an electrical wiring harness of the vehicle associated with the electronic unit leads into the box (24) and has a free length to allow the electronic unit to be fitted and/or extracted without having to disconnect the wiring harness.

10. Arrangement (10) according to any one of the preceding claims, **characterized in that** a rigid trim of the structural element (18) of the seat comprises a hatch through which a vehicle electric wiring harness associated with the electronic unit can pass.

## Patentansprüche

1. Anordnung (10) für den Träger eines Elektronikgehäuses, insbesondere eines Radiorechners, in einem Kraftfahrzeug, der unter der Sitzfläche eines Sitzes (28) des Kraftfahrzeugs angeordnet ist, von dem Typ, bei dem das Elektronikgehäuse gleitend in einen Träger (18) eingebaut wird, der an einem Strukturelement (20) des Sitzes (28) befestigt ist, von dem Typ, bei dem das Gehäuse eine im Wesentlichen parallelepipedische Form hat und nach Art einer Schublade durch eine Einführöffnung (22) hindurch aufgenommen wird, die in einer Seite eines Aufnahmekastens (24) für den Träger parallelepipedischer Form ausgebildet ist, wobei die Seite zur Vorder- oder Rückseite des Sitzes (28) weist,
**dadurch gekennzeichnet, dass** der Träger (18) aufweist:
- einen Querträger (30), der sich quer zwischen zwei Gleitschienen (32) des Sitzes (28) erstreckt, die Teil des Strukturelements (20) des Sitzes (28) sind,
- den parallelepipedischen Aufnahmekasten (24) für den Träger, der an dem Querträger (30) befestigt ist, und
- einen Schutzdeckel (34), der am Querträger (30) befestigt ist und den Aufnahmekasten (24) bedeckt.

2. Anordnung (10) nach dem vorhergehenden Anspruch, **dadurch gekennzeichnet, dass** der Querträger (30) in Form einer im Wesentlichen rechteckigen Platte ausgebildet ist, von der jeder Querendrand (36) im Wesentlichen in seiner Mitte mindestens einen waagrechten Flügel (38) aufweist, der sich in Längs- und Querrichtung nach außerhalb des Querträgers (30) erstreckt, bei dem Bohrungen (40) mit in Längsrichtung entgegengesetzt liegenden senkrechten Achsen dazu bestimmt sind, mit gegenüberliegenden Bohrungen waagrechter Flügel (42) zusammenzufallen, die sich ausgehend von den Schienen (32) nach innen erstrecken, wobei die Bohrungen (40) dazu bestimmt sind, Befestigungsstifte (44) aufzunehmen.

3. Anordnung (10) nach dem vorhergehenden Anspruch, **dadurch gekennzeichnet, dass** jeder Flügel (38) des Querträgers (30) an einem seiner Längsenden eine senkrecht umgebogene Lasche (46) aufweist, in der ein Ausschnitt (48) ausgebildet ist, der dazu bestimmt ist, einen waagrechten Zapfen (50) aufzunehmen, der sich ausgehend von dem Ende des zugeordneten Flügels (42) der Schiene (32) erstreckt, um die Längsstellung des Querträgers (30) vor seiner Befestigung durch die Stifte (44) eindeutig festzulegen.

4. Anordnung (10) nach einem der Ansprüche 2 oder 3, **dadurch gekennzeichnet, dass** der Querträger (30) in einem Zwischenbereich (52) mindestens zwei Langlöcher (54a, 54b) aufweist, die in Quer- und Längsrichtung versetzt und dazu bestimmt sind, Haken (56) aufzunehmen, die aus einem Stück mit dem parallelepipedischen Aufnahmekasten (24) des Trägers (30) hergestellt und dazu bestimmt sind, dessen Befestigung zu gewährleisten.

5. Anordnung (10) nach einem der Ansprüche 2 bis 4, **dadurch gekennzeichnet, dass** jede der Ecken (60) des Querträgers (30) in Form einer rechteckigen Platte eine senkrecht umgebogene Lasche (62) aufweist, die dazu bestimmt ist, den Deckel (34) zu tragen.

6. Anordnung (10) nach dem vorhergehenden Anspruch, **dadurch gekennzeichnet, dass** jede senkrechte umgebogene Lasche (62) eine Bohrung (64) aufweist, die dazu bestimmt ist, einen Befestigungsstift des Deckels (34) aufzunehmen.

7. Anordnung (10) nach dem vorhergehenden Anspruch, **dadurch gekennzeichnet, dass** der Deckel (34) eine im Wesentlichen parallelepipedische Form hat, und dass seine einander quer gegenüberliegende senkrechte Wände (66) Bohrungen aufweisen, die dazu bestimmt sind, die Befestigungsstifte auf den Laschen (62) des Querträgers (30) aufzunehmen.

8. Anordnung (10) nach einem der Ansprüche 1 bis 7, **dadurch gekennzeichnet, dass** der Querträger (30), der parallelepipedische Aufnahmekasten (24) des Trägers und der Deckel (34) aus einem gebogenen und/oder tiefgezogenen Stahlblech hergestellt sind.

9. Anordnung (10) nach einem der vorhergehenden Ansprüche, **dadurch gekennzeichnet, dass** ein dem elektronischen Gehäuse zugeordneter Kabelbaum des Fahrzeugs im Kasten (24) mündet und eine freie Länge aufweist, die den Einbau und/oder den Ausbau des Elektronikgehäuses ohne Lösen des Kabelbaums erlaubt.

10. Anordnung (10) nach einem der vorhergehenden Ansprüche, **dadurch gekennzeichnet, dass** eine steife Verkleidung des Strukturelements (18) des Sitzes eine Klappe aufweist, die dazu bestimmt ist, den Durchgang eines dem elektronischen Gehäuse zugeordneten Kabelbaums des Fahrzeugs zu erlauben.
